Europäisches Patentamt

European Patent Office

Office européen des brevets

(19)

(11) Veröffentlichungsnummer: **0 385 148**

**A1**

(12) **EUROPÄISCHE PATENTANMELDUNG**

(21) Anmeldenummer: **90102377.0**

(22) Anmeldetag: **07.02.90**

(51) Int. Cl.5: **F24D 3/14**

(30) Priorität: **03.03.89 DE 3906729**

(43) Veröffentlichungstag der Anmeldung:
**05.09.90 Patentblatt 90/36**

(84) Benannte Vertragsstaaten:
**AT BE DE ES GB GR IT LU NL**

(71) Anmelder: **D.F. LIEDELT " VELTA"
PRODUKTIONS- UND VERTRIEBS-GMBH
Robert-Koch-Strasse 11
D-2000 Norderstedt(DE)**

(72) Erfinder: **Stüfen, Heino M.
Robert-Koch-Strasse 11
D-2000 Norderstedt(DE)**

(74) Vertreter: **von Raffay, Vincenz, Dipl.-Ing. et al
Patentanwälte Raffay & Fleck Postfach 32 32
17
D-2000 Hamburg 13(DE)**

(54) **Betonfussboden mit Heizungsrohren und Verfahren zum Verlegen von Heizungsrohren für einen Betonfussboden.**

(57) Die Betonfußboden mit Heizungsrohren 3 wird in einem Betonfußboden mit einem oberen und einem unteren Bewehrungsgitter 2, 5 erstellt. Vor dem Gießen des Betons werden die Heizungsrohre 3 auf Aufzugsträgerelementen 4 auf dem unteren Bewehrungsgitter 5 angeordnet. An den Aufzugsträgerelementen werden Abstandshalter 6 befestigt, mit deren Hilfe die Aufzugsträgerelemente mit den Heizungsrohren in die neutrale Ebene oder Zone zwischen den Bewehrungsgittern angehoben werden. Die Abstandshalter werden in dem gewünschten Abstand, d.h. mit entsprechender Länge, in das obere Bewehrungsgitter 2 eingehängt und dort befestigt. Im Anschluß daran erfolgt das Vergießen des Betons.

EP 0 385 148 A1

Die Erfindung betrifft einen Betonfußboden nach dem Oberbegriff des Anspruches 1 und ein Verfahren zum Verlegen von Heizungsrohren für einen solchen Betonfußboden.

Es ist bekannt, bei derartigen Fußbodenkonstruktionen für einen Betonfußboden, d.h. eine sog. Betonplatte, die Heizungsrohre unmittelbar angrenzend an die Bewehrungsgitter, d.h. entweder in der unteren oder in der oberen Bewehrungsebene, zu befestigen.

Durch die EP 0 209 618 ist ein Betonfußboden der eingangs genannten Art bekannt, bei dem die Heizungsrohre an dem oberen Bewehrungsgitter befestigt sind.

Ein Betonfußboden, d.h. eine Betonplatte, wie sie hier mit einer Fußbodenheizung versehen werden soll, unterliegt vielfältigen Spannungen. Diese Spannungen werden durch die Temperatur, ausgehend von der Fußbodenheizung, beeinflußt. Werden beispielsweise die Heizungsrohre in der oberen Bewehrungsebene angeordnet, so kommt es zu Druckspannungen im oberen Bereich aufgrund des höheren Temperaturniveaus und damit zu einer Ausdehnung, so daß Risse in der Betonplatte auftreten können, die schließlich das Tragverhalten beeinflussen. Entsprechende Probleme treten bei der Anordnung der Heizungsrohre im Bereich des unteren Bewehrungsgitters auf.

Der Erfindung liegt nun die Aufgabe zugrunde, einen Betonfußboden und ein Verfahren der eingangs genannten Art zu schaffen, bei dem optimale Wärmeübergangsbedingungen erreicht und eine temperaturunabhängige und spannungsfreie Fußbodenkonstruktion unter Beibehaltung hoher Festigkeitseigenschaften ermöglicht werden.

Diese Aufgabe wird bei einem Betonfußboden nach dem Oberbegriff des Anspruches 1 durch das Kennzeichen dieses Anspruches gelöst. Bei einem Verfahren nach Anspruch 2 wird diese Aufgabe durch die Verfahrensschritte nach dem Kennzeichen dieses Anspruches gelöst.

Bei dem Betonfußboden nach der Erfindung werden die Heizungsrohre nicht in den Bewehrungsebenen, d.h. angrenzend oder anliegend an die Bewehrungsgitter angeordnet, sondern in der neutralen Ebene zwischen den beiden Bewehrungsebenen. Hierdurch entsteht praktisch eine "eigene Bewehrungsebene". Die Wärmeverteilung erfolgt gleichmäßig und es kommt nicht zu Wärmespannungen und damit zu einer nachteiligen Beeinflussung der Festigkeitseigenschaften. Die Heizungsrohre, die ein sogenanntes Heizungsrohrregister bilden, sind allseitig gleichmäßig im Beton eingebettet und in ihrer Funktionslage nach oben gerichtet. Eine einseitige thermische Belastung eines Bewehrungsgitters erfolgt nicht, so daß auch keine entsprechenden einseitigen mechanischen Belastungen auftreten können.

Dadurch, daß die Abstandshalter an dem oberen Bewehrungsgitter fest eingehängt werden, wird auch ein "Aufschwimmen" der Heizungsrohre beim Gießen des Betons verhindert.

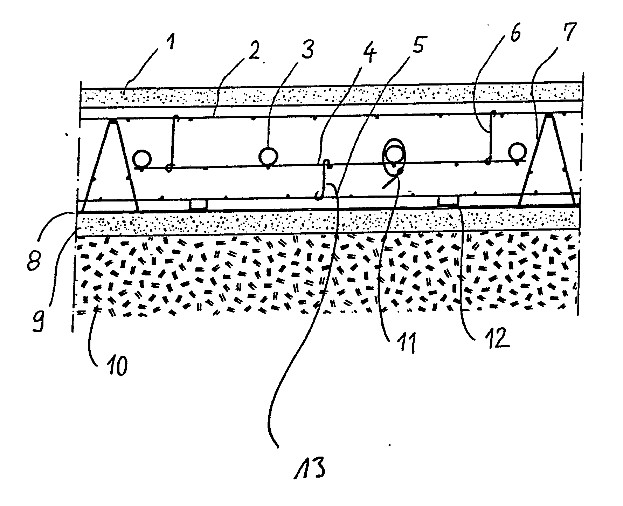

Im folgenden wird die Erfindung unter Hinweis auf die Zeichnung anhand eines Ausführungsbeispieles näher erläutert.

In der einzigen Figur ist eine Fußbodenkonstruktion schematisch im Querschnitt dargestellt. Auf einer Gründungssohle 10 befindet sich ein Sandabgleich 9, auf den das untere Bewehrungsgitter 5 mit Hilfe von Abstandsprofilen 12 aufgelegt ist.

Auf entsprechend höhere, ebenfalls im Querschnitt gezeigte Abstandskörbe 7, ist das obere Bewehrungsgitter 2 aufgelegt. Eine Verschleißschicht ist mit 1 bezeichnet. Wenn die Fußbodenkonstruktion fertiggestellt ist, nehmen die Bauteile die Lage ein, die in der Zeichnung dargestellt ist. Die Heizungsrohre 3 liegen auf gitterförmigen Aufzugträgerelementen 4, auf denen sie mit Hilfe von Rohrbindern 11 befestigt sind. Die von den Heizungsrohren 3 eingenommene Ebene stellt die neutrale Ebene der Fußbodenkonstruktion dar. Die Aufzugträgerelemente 4 sind mit Hilfe von Abstandshaltern 6 an dem oberen Bewehrungsgitter 2 aufgehängt und dort befestigt.

Ein Aufzugträgerelement 4 liegt zwischen zwei Abstandskörben 7. Der Abstand beträgt bei dieser Konstruktion ca. 1 m.

Der Raum zwischen der Verschleißschicht 1 und dem Sandabgleich 9 wird mit Beton/Estrich ausgefüllt, wenn die Heizungsrohre mit den Aufzugträgerelementen die dargestellte Lage einnehmen.

Die Montage erfolgt im wesentlichen in folgenden Schritten:

1. Untere Bewehrungsebene

Verlegung der Abstandsprofile 12 mit aufgelegtem Bewehrungsgitter 5 auf einer Unterkonstruktion, bestehend aus Gründungssohle, Sandabgleich inklusive Trennfolie 8, sowie Verteilung der Abstandskörbe 7 nach einem vorher bestimmten Raster für die oberen Bewehrungsgitter. Im Bereich von Bewegungsfugen (nicht dargestellt) werden die Bewehrungsgitter unterbrochen, so daß eine Bewegungsfuge von Oberkante bis Unterkante Fertigbeton gewährleistet ist.

2. Heizebene

Auflegen der Aufzugträgerelemente 4 zwischen den vorgegebenen Abstandskörben 7 und Verlegen der Heizungsrohre (Rohrregister), mäanderförmig oder bifilar nach vorgegebener Planungsunterlage auf den Aufzugsträgerelementen unter Beachtung der vorgegebenen Bewegungsfugen. Im Bereich der Bewegungsfugen wird das Heizungsrohr durch Rohrschutzhülsen geführt. Die Rohrschutzhülsen haben die Aufgabe, eine zusätzliche Sicherheit gegen mechanische Beanspruchung (Zug-, Druck-und Scherbeanspruchung) im Bewegungsfugenbereich zu bieten. Anschließend erfolgt die Befestigung der Heizungsrohre 3 auf den Aufzugsträgerelementen 4 mittels Rohrbindern 11. Die Abstandshalter 6 in flexiblen Längen werden dann an den Aufzugsträgerelementen befestigt. Die Verteilung der Abstandshalter erfolgt pro laufendem Meter rechts und links sowie in einem Quadratmeter mittig. Eine Positions-Sicherungsklammer 13 wird im unteren Bereich mittig angeordnet, um ein Aufschwimmen der Aufzugsträgerelemente 4 zu verhindern.

## 3. Obere Bewehrungsebene

Auf die Abstandskörbe 7 erfolgt nunmehr die Verlegung der oberen Bewehrungsgitter 2.

## 4. Neutrale Zone

Mittels der in flexiblen Längen vorliegenden Abstandshalter 6 wird das Aufzugsträgerelement 4 in die neutrale Ebene oder Zone hochgezogen. Dabei werden die Abstandshalter in die oberen Bewehrungsgitter fest eingehakt. Durch einen besonderen Einhakteil des Abstandshalters ist dieser fest mit der oberen Bewehrung verbunden. Durch die Positions-Sicherungsklammer 13 zwischen dem unteren Bewehrungsgitter 5 und dem Aufzugsträgerelement 4 wird ein Aufschwimmen beim Gießen des Betons verhindert.

Nach erfolgter Montage und nach dem Anheben der Aufzugsträgerelemente mit den Heizungsrohren wird der Beton/Estrich vergossen. Es entsteht eine Fußbodenkonstruktion zur Aufnahme von statischen und dynamischen Verkehrslasten hoher Qualität. Die Dicke der Fußbodenkonstruktion, die Qualität des Betons/Estrichs und die Materialqualität der Bewehrungsebenen sind hierbei maßgebend für die mögliche Verkehrslast. Eine Beeinträchtigung durch die Verlegung der Heizungsrohre erfolgt nicht.

## Ansprüche

1. Betonfußboden mit Heizungsrohren und mit einem oberen und einem unteren Bewehrungsgitter, dadurch gekennzeichnet, daß die Heizungsrohre (3) in der neutralen Ebene zwischen den Bewehrungsgittern (2 und 5) auf gitterförmigen Aufzugsträgerelementen (4) befestigt sind, die durch Abstandshalter (6) an dem oberen Bewehrungsgitter aufgehängt und gegen Aufschwimmen gesichert sind.

2. Betonfußboden nach Anspruch 1, dadurch gekennzeichnet, daß die Sicherung gegen Aufschwimmen mittels Positions-Sicherungsklammern (13) erfolgt.

3. Verfahren zum Verlegen von Heizungsrohren für einen Betonfußboden nach Anspruch 1, gekennzeichnet durch folgende Verfahrensschritte:

a) Auflegen des gitterförmigen Aufzugsträgerelementes (4) auf das untere Bewehrungsgitter (5);

b) Auflegen und Befestigen der Heizungsrohre (3) auf den Aufzugsträgerelementen (4);

c) Befestigen von Abstandshaltern (6) an den Aufzugsträgerelementen (4);

d) Anheben der Abstandshalter (6) mit den Aufzugsträgerelementen (4) und den Heizungsrohren (3), so daß diese in der neutralen Ebene zwischen der oberen und der unteren Bewegungsebene liegen;

e) Einhaken und Befestigen der Abstandshalter in dem oberen Bewehrungsgitter (2).

4. Verfahren nach Anspruch 3, dadurch gekennzeichnet, daß an dem unteren Bewehrungsgitter (5) Positionssicherungs-Klammern (13) befestigt werden, die an den Aufzugsträgerelementen (4) eingehakt werden, um ein Aufschwimmen zu verhindern.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 913 153 (PFERSCHY)<br>* Insgesamt *<br>--- | 1,2 | F 24 D 3/14 |
| X | CH-A- 209 133 (LUCHSINGER)<br>* Insgesamt *<br>--- | 1,2 | |
| A,D | EP-A-0 209 618<br>(PVG-PATENTVERWALTUNGSGESELLSCHAFT mbH)<br>------ | | |
| | | | **RECHERCHIERTE SACHGEBIETE (Int. Cl.5)**<br><br>F 24 D |

Der vorliegende Recherchenbericht wurde für alle Patentansprüche erstellt

| Recherchenort | Abschlußdatum der Recherche | Prüfer |
|---|---|---|
| DEN HAAG | 04-05-1990 | VAN GESTEL H.M. |